# EUROPEAN PATENT SPECIFICATION

(11) **EP 4 306 337 B1**
(45) Date of publication and mention of the grant of the patent: **26.08.2026**
(21) Application number: 22184296.6
(22) Date of filing: 12.07.2022
(51) Int. Cl.: B60C 23/04

(54) **TIRE PRESSURE LOSS DETECTION**
REIFENDRUCKVERLUSTERKENNUNG
DÉTECTION DE PERTE DE PRESSION DE PNEU

(43) Date of publication of application: 17.01.2024
(73) Proprietor: Bridgestone Europe NV/SA, 1930 Zaventem (BE)
(72) Inventor: ROSATI, Jessica, 00128 Roma (IT); BORTOLOTTO, Valerio, 00128 Roma (IT); Alleva, Lorenzo, 00128 Rome (IT)
(74) Representative: Marchetti, Alessio

(56) References cited:
- WO-A1-2022/139786
- DE-A1- 10 144 362
- DE-A1- 102020 104 928

## Description

### Technical Field

The present invention relates to a method for detecting a pressure loss event in a vehicle tire. The invention further relates to a pressure loss event detection system.

### Background

Being able to detect a pressure loss event in a vehicle tire, which may be associated with a puncture, is important for the safety of the vehicle. Accurate measurements of tire pressures can be obtained using sensors mounted inside the tire.

A sensor mounted inside a tire may be referred to as a Tire Mounted Sensor (TMS). TMSs are used to monitor some parameters of the tire itself, such as the tire pressure and the tire temperature, as well as to extract information on the interaction of the tire with its surrounding environment, such as the road or the vehicle.

Current pressure loss detection methods monitor the pressure in the tires of a vehicle, and compare this measured pressure with a threshold value to determine whether or not the tire pressure is too low, which may be indicative of a puncture.

DE102020104928A1 describes a method and apparatus for determining the condition of a vehicle tire. The disclosure fundamentally relates to the determination of the condition of a vehicle tire at a current point in time by determining, on the basis of measured pressure values of the tire at the current point in time and at a preceding point in time, a rate of change of the pressure of the tire; by comparing the determined rate of change to a reference rate and by determining the condition of the tire on the basis of the comparison.

DE10144362A1 describes a method and system for the detection of a tire's change of state. The disclosure fundamentally relates to analysing data and modulating such data; the modulated data is obtained and compared with a threshold below which an alarm is sounded. A parameter (such as temperature, air, pressure and the like) is used to adjust the level of detail of the modulation.

WO 2022/139786 A1 describes a pressure loss detection system for a vehicle that is able to alert the user that one or more of the tires is experiencing pressure loss which should be addressed. It detects leaks of the tires using both a comparison of a tire to other tires on the vehicle and a natural pressure loss model.

A problem with such methods is that, since the pressure of the tire must fall below the fixed threshold before a pressure loss event is detected, it may be too late for the driver to take any proactive action such as driving to a tire repair shop. Alternatively, earlier warning may be provided by setting a higher threshold value, but doing so increases the likelihood of false positives, inconveniencing a user.

There remains a need for an improved method for reliable early detection of tire pressure loss events.

### Summary of the Invention

According to a first aspect of the invention, there is provided a method of detecting a pressure loss event in a vehicle tire being assessed, the method comprising:
obtaining real-time tire pressure data from a plurality of tire-mounted sensors (TMS) each mounted in one of a plurality of tires, including the tire being assessed, on the same vehicle;
calculating a pressure change rate over a fixed length time window for each of the plurality of tires on the vehicle;
comparing the pressure change rate of the tire being assessed to one or more of the pressure change rates of the other tires in the plurality of tires on the vehicle;
determining, from the comparison, whether the tire being assessed has an anomalous pressure change rate which may be indicative of a pressure loss event in said tire.

It will be appreciated by the person skilled in the art that, by comparing the pressure change rate of the tire being assessed to the pressure change rates of the other tires on the same vehicle, a pressure loss event, for example a puncture, can be detected much more quickly than in methods which compare the tire pressure or pressure change rate with a fixed threshold. Further, the method achieves this rapid detection reliably, whereas to achieve rapid detection using a fixed threshold method, the threshold would have to be set with a low tolerance, increasing the likelihood of false positives.

It will be understood that an anomalous pressure change rate for the tire being assessed is one which does not substantially match the pressure change rate(s) of one or more other tires on the same vehicle. This may be determined, as is described further below, by comparing the pressure change rates repeatedly over different fixed length time windows.

It will be understood that the plurality of TMSs are mounted in the plurality of tires, meaning that they are installed inside the tires, e.g. attached to the inner liner of the tire. When a TMS is mounted inside a tire it is positioned to directly measure the tire's internal air pressure (and optionally the tire's internal temperature). This position delivers benefits such as protecting the sensor from curbing and road debris, as well as delivering a more accurate tire temperature, less affected by ambient temperature changes and heat from the braking system.

In some embodiments, the plurality of tires are all on the same axle of the vehicle. In such embodiments, the pressure change rate of the tire being assessed is compared to one or more of the pressure change rates of the other tire(s) in the plurality of tires on the same axle.

In some embodiments, the method comprises moving the fixed length time window forward in time (e.g. by a fixed increment, e.g. five minutes) to a next fixed length time window; and re-calculating a pressure change rate over the next fixed length time window for each of the plurality of tires. The method may then repeat the comparing and determining steps to re-assess whether the tire being assessed has an anomalous pressure change rate in this next fixed length time window. These steps may be repeated every time the fixed length time window is moved forward in time, i.e. a rolling fixed length time window, so that the method is continually determining whether the tire being assessed has an anomalous pressure change rate. For example, the method may be repeated every five minutes. Repeatedly updating the calculation of the pressure change rate at a relatively high frequency increases the likelihood that any pressure loss event is detected quickly.

In some embodiments, the fixed increment may be decreased upon detection of a pressure loss. For example, the fixed increment may be decreased to two minutes. Such a decrease in the fixed increment would allow a quicker re-computation of the pressure change rate, in order to confirm the presence of a pressure loss event, or identify a false positive. Further, in embodiments where a residual time is calculated, a rapid re-computation of the pressure change rate may increase the accuracy of the residual time.

In some embodiments, the method comprises moving the fixed length time window forward in time by a fixed increment that is less than the length of the fixed length time window. For example, the fixed increment may be 5 minutes for a time window having a fixed length of 30 minutes.

In some embodiments, calculating the pressure change rate over the fixed length time window comprises assessing an average for the pressure change rate. This average may be calculated as the total change in pressure data over the fixed length time window divided by the length of the fixed length time window.

In some embodiments, a sub-window is applied to the pressure data within the fixed length time window and a mean pressure is calculated for the sub-window. This can smooth oscillation in the pressure data and reduce the impact of erroneous measurements. In one embodiment, the length of the sub-window may be 10 minutes. By calculating a mean pressure value for each sub-window, the pressure data obtained within the fixed length time window may be converted to a series of mean pressure values.

In some embodiments, the pressure change rate (PCR) may be computed as the slope m of the least squares first degree polynomial fit of the pressure data obtained within the fixed length time window. In embodiments wherein a mean pressure is calculated for each sub-window, the pressure change rate (PCR) may be computed as the slope m of the least squares first degree polynomial fit of the mean pressure values within the fixed length time window. As mentioned above, the fixed length time window may have a fixed length *dt* e.g. 30 minutes.

In some embodiments, the method further comprises obtaining real-time tire temperature data corresponding to the real-time tire pressure data, and normalizing the real-time tire pressure data using the real-time tire temperature data to remove the effect of any temperature change wherein the calculated pressure change rates are the normalised pressure change rates. The real-time tire temperature data may be obtained from any sensor capable of measuring or estimating internal tire temperature.

In some embodiments, both the normalised pressure change rate, and the non-normalised pressure change rate, are calculated for the tire being assessed.

Removing the effect of temperature changes has the effect of removing large fluctuations in the pressure itself. Therefore, normalised pressure is a more reliable indication of pressure loss due to puncture, rather than giving a false positive, for example due to a pressure loss as a result of a significant drop in temperature.

In some embodiments, normalizing the real-time tire pressure data comprises dividing pressure values of the real-time tire pressure data by corresponding temperature values of the real-time tire temperature data.

In some embodiments, the real-time tire temperature data is obtained from a plurality of tire mounted sensors (TMS) mounted inside the plurality of tires. In preferred embodiments, the real-time tire temperature data is obtained from the same plurality of TMSs used to obtain the real-time tire pressure data.

Using the internal tire temperature retrieved from TMS, rather than external temperature, allows to improve the accuracy of pressure loss detection, being less influenced by atmospheric events. Further, measuring the internal tire pressure and temperature with the same TMS ensures that the temperature and pressure readings were taken in exactly the same conditions and so the pressure readings can be accurately normalised by the temperature readings.

According to the invention, the pressure change rate of the tire being assessed is compared with a pressure change rate threshold value, and is only compared to the pressure change rates of the other tires if the pressure change rate of the tire being assessed is below the threshold value. In some embodiments, only the normalised pressure change rate is compared to a normalised pressure change rate threshold. In alternative embodiments, the normalised pressure change rate is compared to a normalised pressure change rate threshold and the non-normalised pressure change rate is compared to a non-normalised pressure change rate threshold.

In embodiments, the pressure change rate threshold is approximately zero, such that only negative pressure change rates, corresponding to pressure losses, are compared to the pressure change rates of the other tires.

In embodiments, where both the normalised and non-normalised pressure change rates are compared to respective thresholds, both the normalised and non-normalised pressure change rate thresholds may be approximately zero. In a set of embodiments, the normalised pressure change rate threshold is equal to 0.0005, 0.0004, 0.0003, 0.0002 or 0.0001. In a further set of embodiments, the non-normalised pressure change rate threshold is equal to 0.

By only analysing pressure change rates which are negative, i.e. pressure loss rates, the amount of processing required is reduced.

In embodiments, the comparison between the tire being assessed and the other tires is performed by calculating an average pressure change rate (PCR) value from the PCRs of the other tires, and comparing the pressure change rate (PCR) of the tire being assessed to the average PCR value. This is known as a "leave one out" comparison, where PCR is an abbreviation for "pressure change rate".

In embodiments, when it is determined that the tire being assessed has an anomalous pressure change rate, the method further comprises calculating a residual time before a critical pressure value in the tire being assessed is reached. In embodiments, the residual time is calculated by computing the difference between the current pressure, and the critical pressure, and dividing that difference by the current PCR.

The method may further comprise displaying the residual time to a user. In some embodiments, the user may be a driver of the vehicle, and the residual time may be displayed to the driver via a driver terminal located in the vehicle, or via an application installed on the driver's mobile phone. In additional or alternative embodiments, the user may be a fleet manager, and the residual time may be displayed to a fleet manager via a fleet manager application installed on the fleet manager's computer.

Displaying the residual time to a user may allow the user to make a decision about what steps to take next. For example, based on the residual time, the user may determine whether they are able to complete their journey, or whether they need to divert to a tire repair shop.

In embodiments, the method may make a recommendation to the user, such as providing the location of a tire repair shop which they are able to reach in the residual time before the tire pressure reaches a critical value.

In embodiments, the method comprises comparing the residual time to a residual time threshold, and notifying a user with an alert only if the remaining time is below the threshold. In such embodiments, the residual time may still be displayed to the user if the residual time is greater than the threshold, but an explicit alert will not be issued. In embodiments, when the residual time is greater than the residual time threshold, the method may allow more time (e.g. 5 hours) to improve the estimation of the pressure change rate and residual time, in order to check whether or not the detected pressure loss event was a false positive.

Any of the methods disclosed herein can be computer-implemented methods.

According to a second aspect of the invention, there is provided a computer-readable storage medium storing firmware code that, when executed on a data processor, performs the method of the first aspect.

According to a third aspect of the invention, there is provided a pressure loss event detection system comprising:
a plurality of tire mounted sensors (TMS) for collecting real-time tire pressure data from a plurality of tires on the same vehicle; and
a processor, wherein the processor is configured to:
   obtain the real-time tire pressure data from the plurality of tire-mounted sensors (TMS), including a tire to be assessed in the plurality of tires on the vehicle;
   calculate a pressure change rate over a fixed length time window for each of the plurality of tires;
   compare the pressure change rate of a tire being assessed to one or more of the pressure change rates of the other tires in the plurality of tires; and
   determine, from the comparison, whether the tire being assessed has an anomalous pressure change rate which may be indicative of a pressure loss event in said tire.

The processor may be located in the vehicle and arranged to obtain the real-time tire pressure data directly from the plurality of tire mounted sensors. In some embodiments, the processor is located in a remote server and arranged to indirectly obtain the real-time tire pressure data from the plurality of tire mounted sensors, e.g. by receiving the real-time tire pressure data when it is transmitted to the processor by a network communication device installed in the vehicle. A remote server is one that is remote from the vehicle.

In embodiments, the system comprises one or more user output devices. The user output devices may include one or more of: a driver terminal inside the vehicle, a mobile phone, and/or a fleet manager's computer.

It will of course be appreciated that the term 'server' as used herein means a computer or machine (e.g. server device) connected to a network such that the server sends and/or receives data from other devices (e.g. computers or other machines) on that network. Additionally, or alternatively, the server may provide resources and/or services to other devices on the network. The network may be the Internet or some other suitable network. The server may be embodied within any suitable server type or server device, e.g. a file server, application server, communications server, computing server, web server, proxy server, etc. The server may be a single computing device, or may be a distributed system, i.e. the server functionality may be divided across a plurality of computing devices. For example, the server may be a cloud-based server, i.e. its functions may be split across many computers 'on demand'. In such arrangements, server resources may be acquired from one or more data centres, which may be located at different physical locations.

It will thus be appreciated that the processes described above which are carried out by the server, may be carried out by a single computing device, i.e. a single server, or by multiple separate computing devices, i.e. multiple servers. For example, all of the processes may be carried out by a single server which has access to all the relevant information needed.

### Brief description of the drawings

One or more non-limiting examples will now be described, by way of example only, and with reference to the accompanying figures in which:
Figure 1 is a schematic drawing of a pressure loss detection system installed on a heavy goods vehicle;
Figure 2 is a flow chart illustrating a pressure loss detection method;
Figure 3a is a graph of non-normalized tire pressure against time;
Figure 3b is a graph of temperature normalized tire pressure against time;
Figure 4a is a graph showing the normalised pressure of four different tires against time over a ½ hour window in one example;
Figure 4b is a graph showing the normalised pressure of four different tires against time over a later ½ hour window;
Figure 4c is a graph showing the normalised pressure of four different tires against time over an even later ½ hour window;
Figure 5a is a graph showing the normalised pressure of two different tires against time over a 1/2 hour window in another example;
Figure 5b is a graph showing the normalised pressure of the two different tires against time over a 5 hour window including the ½ hour window shown in Figure 5a;
Figure 6 shows an example of an output that may be provided to a user.

### Detailed Description

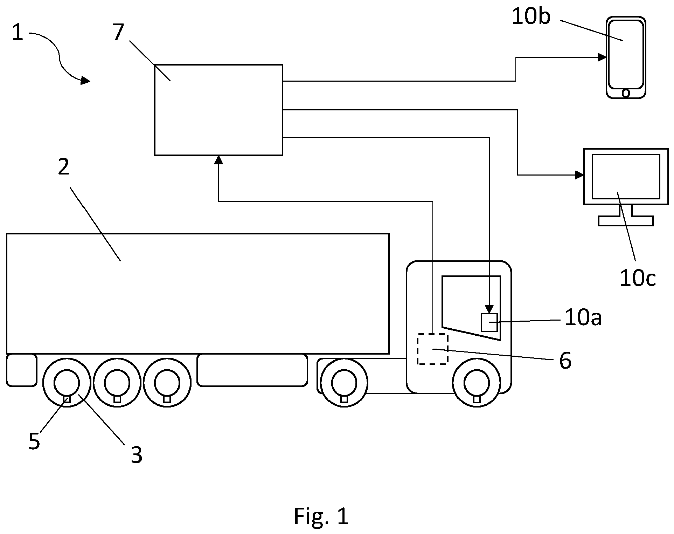

Figure 1 shows a system 1 for detecting a pressure loss event in a vehicle tire 3 mounted on a vehicle 2. The system 1 comprises a plurality of tire-mounted sensors (TMSs) 5, each mounted within a tire 3, and a network communication device 6 provided in the vehicle 2. In embodiments, the network communication device may be a dongle which is plugged into a port of the vehicle 2 such as an OBD port, FMS port, or other. In alterative embodiments, the network communication device 6 may be a permanently installed transceiver box. The TMSs 5 are configured to communicate with a remote server 7, via the dongle 6 in the vehicle 2. In this example the TMSs 5 communicate with the network communication device 6 via a Bluetooth^{®} connection, but it will be understood that any suitable form of short-range wireless communication, or a wired connection, may be used. The network communication device 6 is networked and communicates via a wireless network connection (e.g. cellular network) to a remote server 7. The remote server 7 is connected, via the wireless network, to a user output device 10. In the illustrated embodiment, a plurality of user output devices 10 is provided: a user terminal 10a provided inside the cabin of the vehicle 2, a user mobile device 10b which may be carried by a user, and a fleet manager's computer 10c.

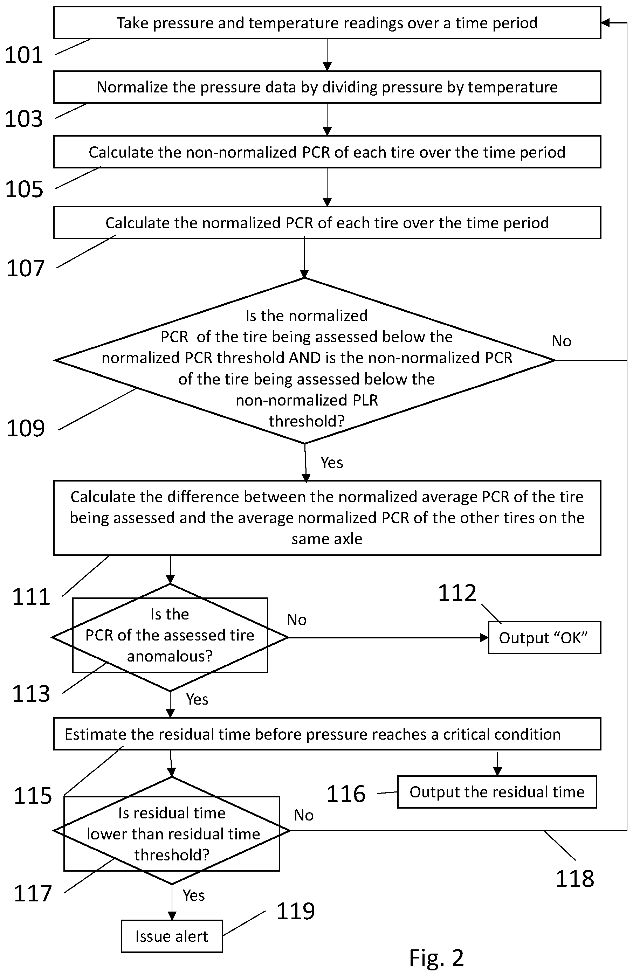

The operation of the system 1 will now be explained with reference to the flow chart of Figure 2. At step 101, the TMSs 5 acquire pressure and temperature data from inside the vehicle tires 3 over a time period corresponding to a fixed length time window, e.g. 30 minutes. In this example, the pressure and temperature data is sent to the network communication device 6 which in turn sends the data to the remote server 7. In this example, the remote server 7 runs an algorithm which first, at step 103, normalizes the tire pressure readings to remove the effect of temperature. The normalized pressure P' is obtained from the raw pressure P and the internal temperature T according to equation 1. $P ′ = \frac{P}{T}$

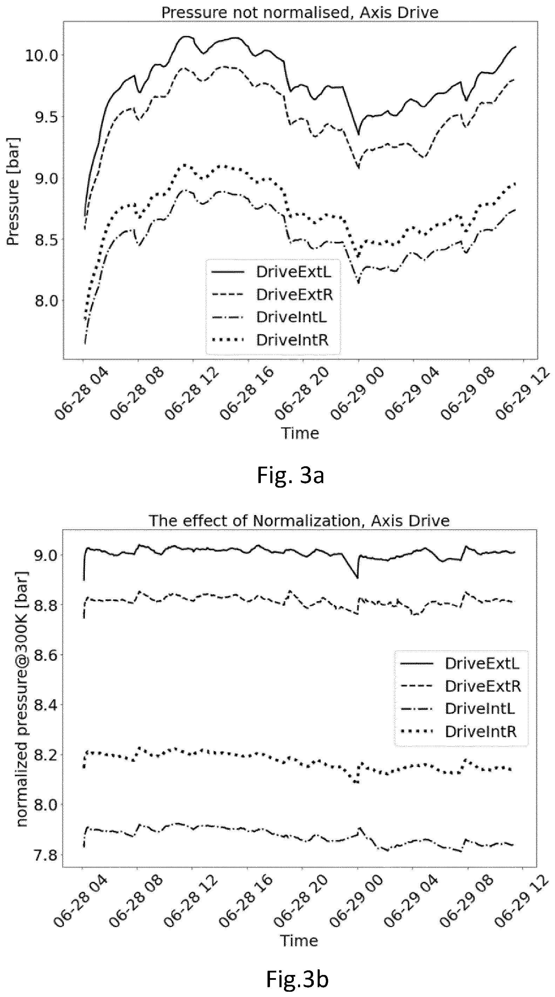

Fig. 3a and Fig 3b show some non-normalised pressure and normalised pressure readings respectively plotted against time, over a period of about 32 hours. As is clear from the Figures, the normalised pressure graph (Fig. 3b) is much flatter than the non-normalised graph (Fig. 3a), and so can be more reliably relied upon for monitoring pressure changes due to potential punctures, since fluctuations due to temperature will only act to interfere with the detection of punctures.

The internal temperature is used to normalise the pressure data to improve the accuracy of pressure loss detection, since the internal temperature is less influenced by atmospheric events than temperature measured at a point external to the tire.

Before or after the normalizing step 103 in Fig. 2, the pressure values taken over the time period may be smoothed or averaged in a suitable way. This may involve, for example, applying a sub-window (e.g. 10 minutes) inside the fixed length time window of the time period (e.g. 30 minutes). The sub-window is used to generate a rolling mean from the pressure values (normalised and/or non-normalised) within the sub-window. This is done in order to smooth oscillation in the pressure values and, as such, to remove the impact of erroneous values. This means that, at every moment, it is not the instantaneous pressure that is considered but rather a mean value based on the last sub-window (e.g. 10 minutes).

At steps 105 and 107, respectively, the algorithm then computes pressure change rate (PCR) in the non-normalised pressure (non-normalised PCR) and the rate of change in the normalised pressure (normalised PCR) over the fixed length time window (e.g. 1/2-hour window) for all the tires in the plurality of tires. In the illustrated embodiment, the plurality of tires are all mounted on the same axle of a vehicle, but it will be understood that this is an optional feature, and that the plurality of tires may simply be mounted on the same vehicle.

The normalised PCR is calculated as the slope m of the least squares first degree polynomial fit of the mean normalised pressure values within the fixed length time window. Similarly, the non-normalised PCR is calculated as the slope m of the least squares first degree polynomial fit of the mean non-normalised pressure values within the fixed length time window. The algorithm then compares, at step 109, the normalised and non-normalised PCR with normalised and non-normalised PCR thresholds respectively. The thresholds are set close to zero and the comparison is satisfied if the normalised and non-normalised PCRs are below their respective thresholds, i.e. to rule out any substantially positive pressure change rate. This increases the likelihood that the comparison is only satisfied for pressure loss events, where both pressure and normalised pressure decrease over the time window, and not for situations where the pressure increases. If the pressure has increased, then there is no need to further analyse the data to detect a pressure loss event and so no further analysis is carried out. In some embodiments, the values of the non-normalised and normalised PCR thresholds are set to 0 and 0.0005 respectively.

If both the normalised PCR and the non-normalised PCR are below their respective thresholds, then, the algorithm proceeds to step 111. If either or both of the normalised PCR and non-normalised PCR are above their respective thresholds, then the algorithm returns to step 101. In embodiments, the comparison of step 109 may be omitted, and the algorithm may proceed directly from the calculation of the PCRs at steps 105 and 107, to the difference calculation of step 111.

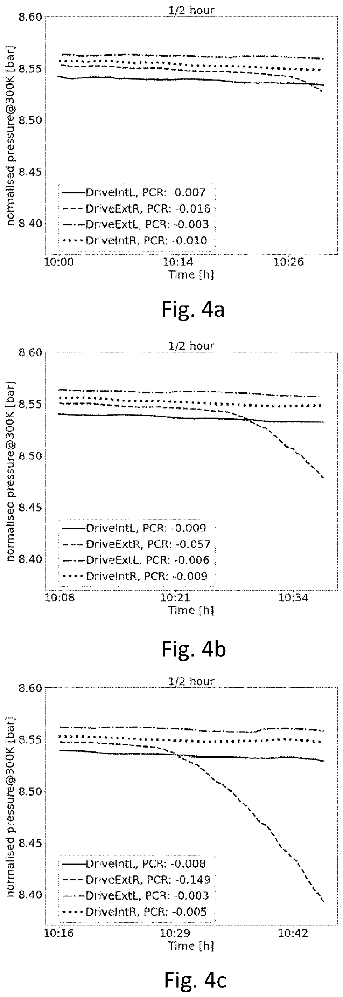

At steps 111 and 113, the algorithm uses statistical methods, which are explained in detail below, to identify significant differences between the normalised PCR of the tire being assessed, and the normalised PCR of the other tires on the same axle and to extract an anomalous PCR that is potentially associated with a pressure loss event such as a tire puncture. Figures 4a, 4b, and 4c show three different time window positions comparing normalized pressure across the four tires of the Drive axle, when one of them had a puncture. By using a sliding window of 30-minute length, it is evident that in Fig. 4a the pressure change rate (PCR) of the tire in position "DriveExtR" is mainly consistent with the PCR values of the tires in the other positions up until a time of around 10:26, in Fig. 4b the time window has moved forward and the PCR of the tire in position "DriveExtR" has diverged from PCR values of the tires in the other positions, being different by an order of magnitude at a time of around 10:34, and in Fig. 4c the difference further increases to two orders of magnitude when the time window moves forward to look at times up to around 10:42. By repeating its analysis over subsequent time windows, the algorithm is constantly looking for any anomaly in the normalized pressure rate change (PCR) for a particular tire as compared to other tires on the same axle, which indicates a puncture has occurred in that tire.

In order to identify an anomalous PCR in this example, a coaxial comparison is carried out using the "leave-one-out" approach. For the tire being assessed, the algorithm computes the difference between its PCR and the average PCR of the other tire positions on the same axle. A statistical approach can then be used to define anomalies in the distribution of PCR differences arising between the average PCRs. In an embodiment, anomalies are defined by simply looking for outliers in the distribution of PCR differences. An outlier here is a PCR difference that is sufficiently far from the others, with the sufficiency of the difference between the computed PCR differences being based on the interquartile range. More specifically, an outlier is any observation of a distribution that lies outside the range: $\left[{Q}_{1}-k\left({Q}_{3}-{Q}_{1}\right); {Q}_{3}+k\left({Q}_{3}-{Q}_{1}\right)\right]$

Where *Q*₁ and *Q*₃ are respectively the lower and upper quartile, and k a constant that is conventionally set to 1.5.

An anomalous PCR is a PCR of the current fixed length time window wherein the difference between the PCR, and the average PCR of the other tire positions on the same axle, is an outlier in the distribution of coaxial PCR differences.

In order to make the distribution of PCR differences wider and more representative, both the coaxial PCR differences computed in the current fixed length time window, and the coaxial PCR differences computed on previous days using windows of the same fixed length size, may be used.

If the normalised PCR is not identified as anomalous, an output of "OK" is issued to the user at step 112. If an anomalous PCR has been identified, together with the tire position that produces such a difference in its PCR as compared to the other tire positions on the same axle, the algorithm optionally estimates, at step 115, for that tire position the remaining time before pressure reaches a critical condition, expressed in days and/or hours. In embodiments, the residual time is mathematically calculated using the following equation: ${T}_{residual} = \frac{P - {P}_{critical}}{m}$

Where *T_{residual}* **is** the residual time, P is the current pressure, *P_{critical}* is the critical pressure, and m is the PCR, calculated as the slope of the least squares first degree polynomial fit of the mean pressure values within the fixed length time window of the time period.

In embodiments, the critical pressure may be defined as 6 bar for TBR (truck and bus radial) tires. Alternatively, the critical pressure may be set to 60% of the standard inflation pressure. The estimated residual time allows to define the dangerousness (speed) of the criticality/pressure loss.

At step 116, the residual time associated with the anomalous PCR is output to the user. At step 117, the residual time is compared to a residual time threshold. If the residual time is lower than the threshold, then the user is notified with an alert at step 119. If the residual time is greater than the residual time threshold, then the magnitude of the pressure change rate is low and so the pressure loss detection may be a false positive. Therefore, in such scenarios, more time is allowed (e.g. 5 hours) to re-assess the PCR in multiple subsequent time windows and to improve the estimate of the residual time or to verify if a criticality is a false positive. As such, the method loops back to the first step 101, and the time period is shifted forwards (for example by 5 minutes). As such, more pressure and temperature readings are taken, and the method is repeated for subsequent time windows, as shown by arrow 118.

It will of course be understood that the described process will be carried out multiple times, with each tire 3 on the axle in turn being the assessed tire.

In the algorithm of the illustrated embodiment, the length of the time window for PCR comparison has been set up to 30 minutes. The algorithm repeats its assessment in subsequent time windows that are shifted forward by 5 minutes. In embodiments the threshold for the definition of an urgent alert is set to 12 hours.

The TMS Pressure Loss detection algorithm described herein has been developed using an experiment performed on multiple tires and having in mind two main factors of accuracy: the number of false positives and the time needed to detect the leakage as a percentage of the time required for the pressure to reach a critical value.

The experiment involved three vehicles 2 running for more than 75,000 km each, with different types of load. For this experiment the TMS Pressure Loss detection algorithm was run with a frequency of a run every 5 minutes. Two pressure losses due to puncture were observed:
- In the first puncture, the leakage was detected after 2 minutes from its occurrence, when pressure had decreased by 0.3 bar (i.e. a relatively "fast" puncture).
- In the second puncture, the leakage was detected after 16 minutes from its occurrence, when pressure had decreased by only 0.15 bar (i.e. a relatively "slow" puncture).

There were no false positives and the detection time was in both cases within 10% of time to critical.

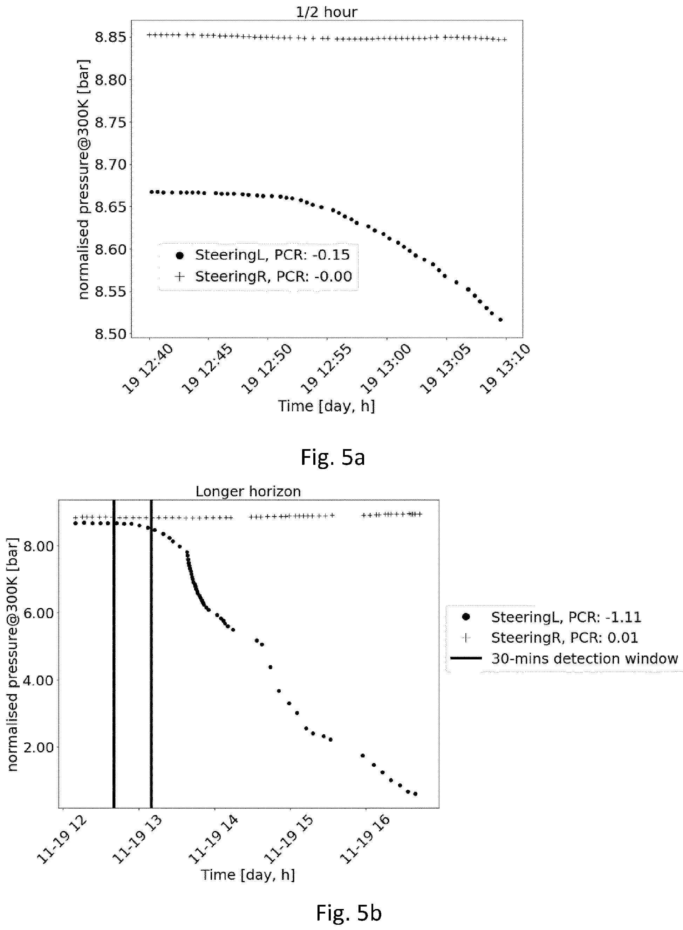

Fig. 5a and Fig. 5b show normalized pressure versus time plots for a pressure loss event detected by the algorithm. The algorithm relies on a 30-minute sliding window in which data is taken by the TMSs 5. It is the TMS data acquired during each 30-minute window on which the coaxial comparison is carried out. This window moves forward each time by a fixed amount of minutes, e.g. 5 minutes. Fig. 5a illustrates a 30-minute time window in which the anomalous PCR is first detected. The difference in the PCRs for the different tire positions on the Steering axle is clear, with the tire position SteeringL seen to correspond to a large pressure change rate. For a PCR of this severity, the residual time to critical is below the fixed threshold (12 hours in the illustrated embodiment), and so an alert would immediately be triggered. Fig. 5b shows the normalized pressure over a five-hour window including the initial detection. As shown in Fig. 5b, the 30-minute detection window corresponds to the beginning of the tire air leakage, which thereafter increases its speed and reaches a pressure value of 2 bar in approximately two and a half hours.

Whilst in the above example, the algorithm is described as being deployed in the remote server 7 (e.g. in a processor thereof), in other embodiments, the network communication device 6 may comprise a processor for running the algorithm in the vehicle 2. In such embodiments, the network communication device 6 may then communicate any residual time estimates or warnings directly to the user terminal 10a provided in the vehicle 2, bypassing the requirement for a network connection. In such embodiments, the output of the algorithm may still be sent to the remote server 7 via a network, such that the output may be sent from the remote server 7 to the mobile device 10b and/or the fleet manager's computer 10c. The deployment of the algorithm in the network communication device 6 significantly reduces the data transmission to the remote server 7. In other embodiments, the steps carried out by the algorithm may be split between a processor of the network communication device 6 and a processor of the remote server 7, so as to share the data processing burden and reduce some of the data transmission burden.

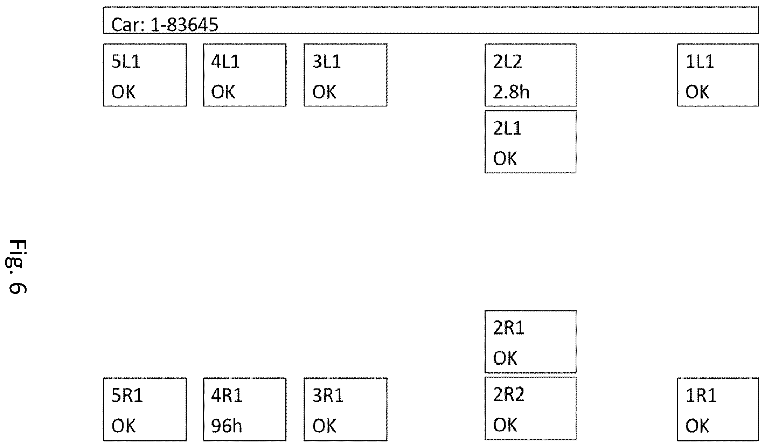

Fig. 6 illustrates the output of the algorithm that can be displayed on any of the user terminals 10a, 10b, 10c. For the tires with a non-anomalous PCR, an output of "OK" is displayed. For those tires, 2L2, and 4R1, which have an anomalous PCR, the residual time to critical is displayed. In the example shown in Fig. 6, the residual time for tire 4R1 is 96 hours. Since this is above the threshold of 12 hours, an alert for this tire will not be issued, and the PCR will be re-assessed to confirm or correct the detection of a puncture. The residual time for the tire 2L2 is only 2.8 hours and so an alert will be issued to the user.

It is envisaged that the method may further include the step of issuing guidance to the user about the next steps. For example, the system of the invention may be integrated with a navigation system, and may identify a tire repair shop which the user will be able to reach within the residual time. The method may further include making an automatic booking at the tire repair shop, or, in the case of less severe punctures, may schedule maintenance.

## Claims

1. A method of detecting a pressure loss event in a vehicle tire being assessed, the method comprising:
obtaining (101) real-time tire pressure data from a plurality of tire-mounted sensors (TMS) each mounted in one of a plurality of tires, including the tire being assessed, on the same vehicle;
calculating (105, 107) a pressure change rate over a fixed length time window for each of the plurality of tires on the vehicle:
comparing (109) the pressure change rate of the tire being assessed to one or more of the pressure change rates of the other tires in the plurality of tires on the vehicle;
determining (113), from the comparison, whether the tire being assessed has an anomalous pressure change rate which may be indicative of a pressure loss event in said tire;
**characterised in that** the pressure change rate of the tire being assessed is compared (117) with a pressure change rate threshold value, and is only compared to the pressure change rates of the other tires if the pressure change rate of the tire being assessed is below the threshold value.

2. The method of claim 1, wherein the plurality of tires (3) are on the same axle of the vehicle (2).

3. The method of claim 1 or claim 2, comprising:
moving the fixed length time window forward in time to a next fixed length time window; and
re-calculating a pressure change rate over the next fixed length time window for each of the plurality of tires.

4. The method of any preceding claim, wherein the method further comprises obtaining (101) real-time tire temperature data corresponding to the real-time tire pressure data, and normalizing (103) the real-time tire pressure data using the real-time tire temperature data to remove the effect of any temperature change, wherein the calculated pressure change rate is a normalised pressure change rate (107).

5. The method of claim 4, wherein normalizing (103) the real-time tire pressure data comprises dividing pressure values of the real-time tire pressure data by corresponding temperature values of the real-time tire temperature data.

6. The method of claim 4 or claim 5, wherein the real-time tire temperature data is obtained from the same said plurality of TMSs (5) used to obtain the real-time tire pressure data.

7. The method of claim 1, wherein the pressure change rate threshold is approximately zero, such that only negative pressure change rates, corresponding to pressure losses, are compared to the pressure change rates of the other tires.

8. The method of any preceding claim, wherein the comparison between the tire being assessed and the other tires is performed by calculating an average pressure change rate value for the other tires, and comparing (111) the pressure change rate of the tire being assessed to the average pressure change rate value.

9. The method of any preceding claim, further comprising, after determining (113) that the tire being assessed has an anomalous pressure change rate, calculating (115) a residual time before a critical pressure value in the tire being assessed is reached, optionally comprising displaying (116) the residual time to a user.

10. The method of claim 9, further comprising comparing (117) the residual time to a residual time threshold, and notifying a user with an alert only if the remaining time is below the threshold.

11. A computer-readable storage medium storing firmware code that, when executed on a data processor, performs the method of any preceding claim.

12. A pressure loss event detection system (1) comprising:
a plurality of tire mounted sensors (TMS) (5) for collecting real-time tire pressure data from a plurality of tires (3) on the same vehicle (2); and
a processor, wherein the processor is configured to:
obtain (101) the real-time tire pressure data from the plurality of tire-mounted sensors (TMS), including a tire to be assessed in the plurality of tires on the vehicle;
calculate (105, 107) a pressure change rate over a fixed length time window for each of the plurality of tires;
compare (109) the pressure change rate of a tire being assessed to one or more of the pressure change rates of the other tires in the plurality of tires; and
determine (113), from the comparison, whether the tire being assessed has an anomalous pressure change rate which may be indicative of a pressure loss event in said tire;
**characterised in that** the pressure change rate of the tire being assessed is compared (117) with a pressure change rate threshold value, and is only compared to the pressure change rates of the other tires if the pressure change rate of the tire being assessed is below the threshold value.

13. The system of claim 12, wherein the processor is located in a server (7) that is remote from the vehicle.

14. The system of claim 12 or 13 configured to perform the method of any of claims 1 to 10.

## Patentansprüche

1. Verfahren zum Erkennen eines Druckverlustereignisses in einem Fahrzeugreifen, der beurteilt wird, das Verfahren umfassend:
Erhalten (101) von Echtzeitreifendruckdaten von einer Vielzahl von reifenmontierten Sensoren (TMS), die jeweils in einem einer Vielzahl von Reifen, die den Reifen einschließt, der beurteilt wird, an dem gleichen Fahrzeug montiert sind;
Berechnen (105, 107) einer Druckänderungsrate über ein Zeitfenster fester Länge für jeden der Vielzahl von Reifen an dem Fahrzeug:
Vergleichen (109) der Druckänderungsrate des Reifens, der beurteilt wird, mit einer oder mehreren der Druckänderungsraten der anderen Reifen in der Vielzahl von Reifen an dem Fahrzeug;
Bestimmen (113) anhand des Vergleichs, ob der Reifen, der beurteilt wird, eine anomale Druckänderungsrate aufweist, die auf ein Druckverlustereignis in dem Reifen hinweisen kann;
**dadurch gekennzeichnet, dass** die Druckänderungsrate des Reifens, der beurteilt wird, mit einem Druckänderungsratenschwellenwert verglichen (117) wird und nur mit den Druckänderungsraten der anderen Reifen verglichen wird, falls die Druckänderungsrate des Reifens, der beurteilt wird, unter dem Schwellenwert liegt.

2. Verfahren nach Anspruch 1, wobei die Vielzahl von Reifen (3) auf der gleichen Achse des Fahrzeugs (2) sind.

3. Verfahren nach Anspruch 1 oder 2, umfassend:
Bewegen des Zeitfensters fester Länge zeitlich nach vorn zu einem nächsten Zeitfenster fester Länge; und
Neuberechnen einer Druckänderungsrate über das nächste Zeitfenster fester Länge für jeden der Vielzahl von Reifen.

4. Verfahren nach einem der vorstehenden Ansprüche, wobei das Verfahren ferner das Erhalten (101) von Echtzeitreifentemperaturdaten, die den Echtzeitreifendruckdaten entsprechen, und ein Normalisieren (103) der Echtzeitreifendruckdaten unter Verwendung der Echtzeitreifentemperaturdaten umfasst, um die Auswirkung einer beliebigen Temperaturänderung zu beseitigen, wobei die berechnete Druckänderungsrate eine normalisierte Druckänderungsrate (107) ist.

5. Verfahren nach Anspruch 4, wobei das Normalisieren (103) der Echtzeitreifendruckdaten ein Dividieren von Druckwerten der Echtzeitreifendruckdaten durch entsprechende Temperaturwerte der Echtzeitreifentemperaturdaten umfasst.

6. Verfahren nach Anspruch 4 oder 5, wobei die Echtzeitreifentemperaturdaten von der gleichen Vielzahl von TMS (5) erhalten werden, die verwendet wird, um die Echtzeitreifendruckdaten zu erhalten.

7. Verfahren nach Anspruch 1, wobei die Druckänderungsratenschwelle derart etwa null ist, dass nur negative Druckänderungsraten, die Druckverlusten entsprechen, mit den Druckänderungsraten der anderen Reifen verglichen werden.

8. Verfahren nach einem der vorstehenden Ansprüche, wobei der Vergleich zwischen dem Reifen, der beurteilt wird, und den anderen Reifen durch das Berechnen eines durchschnittlichen Druckänderungsratenwerts für die anderen Reifen und das Vergleichen (111) der Druckänderungsrate des Reifens, der beurteilt wird, mit dem durchschnittlichen Druckänderungsratenwert durchgeführt wird.

9. Verfahren nach einem der vorstehenden Ansprüche, ferner umfassend, nach dem Bestimmen (113), dass der Reifen, der beurteilt wird, eine anomale Druckänderungsrate aufweist, das Berechnen (115) einer Restzeit, bevor ein kritischer Druckwert in dem Reifen, der beurteilt wird, erreicht wird, optional umfassend ein Anzeigen (116) der Restzeit an einen Benutzer.

10. Verfahren nach Anspruch 9, ferner umfassend das Vergleichen (117) der Restzeit mit einer Restzeitschwelle und ein Benachrichtigen eines Benutzers mit einer Warnung nur, falls die verbleibende Zeit unter der Schwelle liegt.

11. Computerlesbares Speichermedium, das Firmware-Code speichert, der, wenn er auf einem Datenprozessor ausgeführt wird, das Verfahren nach einem der vorstehenden Ansprüche durchführt.

12. Druckverlustereigniserkennungssystem (1), umfassend:
eine Vielzahl von reifenmontierten Sensoren (TMS) (5) zum Sammeln von Echtzeitreifendruckdaten
von einer Vielzahl von Reifen (3) an dem gleichen Fahrzeug (2); und
einen Prozessor, wobei der Prozessor konfiguriert ist zum:
Erhalten (101) der Echtzeitreifendruckdaten von der Vielzahl von reifenmontierten Sensoren (TMS), die einen Reifen einschließen, der zu beurteilen ist, in der Vielzahl von Reifen an dem Fahrzeug;
Berechnen (105, 107) einer Druckänderungsrate über ein Zeitfenster fester Länge für jeden der Vielzahl von Reifen;
Vergleichen (109) der Druckänderungsrate eines Reifens, der beurteilt wird, mit einer oder mehreren der Druckänderungsraten der anderen Reifen in der Vielzahl von Reifen; und
Bestimmen (113) anhand des Vergleichs, ob der Reifen, der beurteilt wird, eine anomale Druckänderungsrate aufweist, die auf ein Druckverlustereignis in dem Reifen hinweisen kann;
**dadurch gekennzeichnet, dass** die Druckänderungsrate des Reifens, der beurteilt wird, mit einem Druckänderungsratenschwellenwert verglichen (117) wird und nur mit den Druckänderungsraten der anderen Reifen verglichen wird, falls die Druckänderungsrate des Reifens, der beurteilt wird, unter dem Schwellenwert liegt.

13. System nach Anspruch 12, wobei der Prozessor sich in einem Server (7) befindet, der von dem Fahrzeug entfernt ist.

14. System nach Anspruch 12 oder 13, das konfiguriert ist, um das Verfahren nach einem der Ansprüche 1 bis 10 durchzuführen.

## Revendications

1. Procédé de détection d'un événement de perte de pression dans un pneu de véhicule en cours d'évaluation, le procédé comprenant :
l'obtention (101) de données de pression de pneu en temps réel auprès d'une pluralité de capteurs montés sur pneu (TMS) montés chacun dans l'un parmi une pluralité de pneus, y compris le pneu en cours d'évaluation, sur le même véhicule ;
le calcul (105, 107) d'un taux de changement de pression sur une fenêtre temporelle de longueur fixe pour chacun parmi la pluralité de pneus sur le véhicule :
la comparaison (109) du taux de changement de pression du pneu en cours d'évaluation à un ou plusieurs des taux de changement de pression des autres pneus dans la pluralité de pneus sur le véhicule ;
le fait de déterminer (113), à partir de la comparaison, si le pneu en cours d'évaluation a un taux de changement de pression anormal qui peut indiquer un événement de perte de pression dans ledit pneu ;
**caractérisé en ce que** le taux de changement de pression du pneu en cours d'évaluation est comparé (117) à une valeur seuil de taux de changement de pression, et est uniquement comparé aux taux de changement de pression des autres pneus si le taux de changement de pression du pneu en cours d'évaluation est inférieur à la valeur seuil.

2. Procédé selon la revendication 1, dans lequel la pluralité de pneus (3) sont sur le même essieu du véhicule (2).

3. Procédé selon la revendication 1 ou la revendication 2, comprenant :
le déplacement de la fenêtre temporelle de longueur fixe vers l'avant dans le temps jusqu'à une fenêtre temporelle de longueur fixe suivante ; et
le recalcul d'un taux de changement de pression sur la fenêtre temporelle de longueur fixe suivante pour chacun parmi la pluralité de pneus.

4. Procédé selon l'une quelconque revendication précédente, dans lequel le procédé comprend en outre l'obtention (101) de données de température en temps réel correspondant aux données de pression de pneu en temps réel, et la normalisation (103) des données de pression de pneu en temps réel à l'aide des données de température en temps réel pour supprimer l'effet d'un changement de température éventuel, dans lequel le taux de changement de pression calculé est un taux de changement de pression normalisé (107).

5. Procédé selon la revendication 4, dans lequel la normalisation (103) des données de pression de pneu en temps réel comprend la division de valeurs de pression des données de pression de pneu en temps réel par des valeurs de température correspondantes des données de température en temps réel.

6. Procédé selon la revendication 4 ou la revendication 5, dans lequel les données de température en temps réel sont obtenues à partir de la même pluralité précitée de TMS (5) que celle utilisée pour obtenir les données de pression de pneu en temps réel.

7. Procédé selon la revendication 1, dans lequel le seuil de taux de changement de pression est approximativement de zéro, de telle sorte que seuls des taux de changement de pression négatifs, correspondant à des pertes de pression, sont comparés aux taux de changement de pression des autres pneus.

8. Procédé selon l'une quelconque revendication précédente, dans lequel la comparaison entre le pneu en cours d'évaluation et les autres pneus est mise en œuvre en calculant une valeur de taux de changement de pression moyenne pour les autres pneus, et en comparant (111) le taux de changement de pression du pneu en cours d'évaluation à la valeur de taux de changement de pression moyenne.

9. Procédé selon l'une quelconque revendication précédente, comprenant en outre, après détermination (113) que le pneu en cours d'évaluation a un taux de changement de pression anormal, le calcul (115) d'un temps résiduel avant qu'une valeur de pression critique dans le pneu en cours d'évaluation soit atteinte, comprenant facultativement l'affichage (116) du temps résiduel à un utilisateur.

10. Procédé selon la revendication 9, comprenant en outre la comparaison (117) du temps résiduel à un seuil de temps résiduel, et la notification d'un utilisateur avec une alerte uniquement si le temps restant est inférieur au seuil.

11. Support de stockage lisible par ordinateur stockant un code de micrologiciel qui, lorsqu'il est exécuté sur un processeur de données, met en œuvre le procédé selon l'une quelconque revendication précédente.

12. Système de détection d'événement de perte de pression (1) comprenant :
une pluralité de capteurs montés sur pneu (TMS) (5) permettant de collecter des
données de pression de pneu en temps réel auprès d'une pluralité de pneus (3) sur le même véhicule (2) ; et
un processeur, dans lequel le processeur est configuré pour :
obtenir (101) les données de pression de pneu en temps réel auprès de la pluralité de capteurs montés sur pneu (TMS), y compris un pneu à évaluer dans la pluralité de pneus sur le véhicule ;
calculer (105, 107) un taux de changement de pression sur une fenêtre temporelle de longueur fixe pour chacun parmi la pluralité de pneus ;
comparer (109) le taux de changement de pression d'un pneu en cours d'évaluation à un ou plusieurs des taux de changement de pression des autres pneus dans la pluralité de pneus ; et
déterminer (113), à partir de la comparaison, si le pneu en cours d'évaluation a un taux de changement de pression anormal qui peut indiquer un événement de perte de pression dans ledit pneu ;
**caractérisé en ce que** le taux de changement de pression du pneu en cours d'évaluation est comparé (117) à une valeur seuil de taux de changement de pression, et est uniquement comparé aux taux de changement de pression des autres pneus si le taux de changement de pression du pneu en cours d'évaluation est inférieur à la valeur seuil.

13. Système selon la revendication 12, dans lequel le processeur est localisé dans un serveur (7) qui est distant du véhicule.

14. Système selon la revendication 12 ou 13 configuré pour mettre en œuvre le procédé selon l'une quelconque des revendications 1 à 10.
